(19) Europäisches Patentamt
European Patent Office
Office européen des brevets

(11) **EP 2 427 992 B1**

(12) **FASCICULE DE BREVET EUROPEEN**

(45) Date de publication et mention
de la délivrance du brevet:
**29.10.2014 Bulletin 2014/44**

(51) Int Cl.:
*H04L 5/14* *(2006.01)*     *H04L 25/02* *(2006.01)*
*H04L 25/03* *(2006.01)*    *H04B 7/06* *(2006.01)*
*H04L 1/00* *(2006.01)*     *H04B 7/04* *(2006.01)*
*H04B 7/02* *(2006.01)*

(21) Numéro de dépôt: **10727073.8**

(22) Date de dépôt: **30.04.2010**

(86) Numéro de dépôt international:
**PCT/FR2010/050826**

(87) Numéro de publication internationale:
**WO 2010/128235 (11.11.2010 Gazette 2010/45)**

(54) **PROCEDE DE PRE-EGALISATION D'UN SIGNAL DE DONNEES PAR RETOURNEMENT TEMPOREL EN FDD**

VERFAHREN ZUR VORENTZERRUNG EINES DATENSIGNALS DURCH FDD-ZEITUMKEHR

METHOD FOR PRE-EQUALIZING A DATA SIGNAL BY FDD TIME REVERSAL

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**

(30) Priorité: **07.05.2009  FR 0953066**

(43) Date de publication de la demande:
**14.03.2012  Bulletin 2012/11**

(73) Titulaire: **Orange**
**75015 Paris (FR)**

(72) Inventeurs:
- **PHAN HUY, Dinh Thuy**
  **F-75004 Paris (FR)**
- **CHAUFRAY, Jean-Marie**
  **F-92290 Chatenay Malabry (FR)**

(56) Documents cités:
WO-A2-2007/103085     US-A1- 2003 138 053
US-A1- 2007 099 571     US-B1- 6 285 859

- TOURIN A ET AL: "Time reversal telecommunications in complex environments" COMPTES RENDUS - PHYSIQUE, ELSEVIER, PARIS, FR, vol. 7, no. 7, 1 septembre 2006 (2006-09-01), pages 816-822, XP024978786 ISSN: 1631-0705 [extrait le 2006-09-01]

- ROBERT C QIU ED - ANONYMOUS: "A Theory of Time-Reversed Impulse Multiple-Input Multiple-Output (MIMO) for Ultra-Wideband (UWB) Communications" ULTRA-WIDEBAND, THE 2006 IEEE 2006 INTERNATIONAL CONFERENCE ON, IEEE, PI, 1 septembre 2006 (2006-09-01), pages 587-592, XP031007200 ISBN: 978-1-4244-0101-7

- DAHL T ET AL: "Blind beamforming in frequency division duplex MISO systems based on time reversal mirrors" SIGNAL PROCESSING ADVANCES IN WIRELESS COMMUNICATIONS, 2005 IEEE 6TH W ORKSHOP ON NEW YORK, NY, USA JUNE 2-8, 2005, PISCATAWAY, NJ, USA, IEEE, 2 juin 2005 (2005-06-02), pages 640-644, XP010834538 ISBN: 978-0-7803-8867-3

- GOMES J ET AL: "Time-reversed OFDM communication in underwater channels" SIGNAL PROCESSING ADVANCES IN WIRELESS COMMUNICATIONS, 2004 IEEE 5TH W ORKSHOP ON LISBON, PORTUGAL 11-14 JULY 2004, PISCATAWAY, NJ, USA,IEEE, 11 juillet 2004 (2004-07-11), pages 626-630, XP010805978 ISBN: 978-0-7803-8337-1

- PATRICE PAJUSCO ET AL: "Characterization of UWB time reversal using circular array measurements" WIRELESS TECHNOLOGIES, 2007 EUROPEAN CONFERENCE ON, IEEE, PI, 1 octobre 2007 (2007-10-01), pages 102-105, XP031190917 ISBN: 978-2-87487-003-3

**Description**

La présente invention concerne un procédé de pré-égalisation d'un signal de données, par exemple transmis dans un réseau de communication radio basé sur un duplexage en fréquence FDD (pour "frequency division duplex" en anglais).

Dans un réseau de type FDD, deux entités communicantes transmettent des signaux de données dans des bandes de fréquence distinctes. Les entités communicantes sont par exemple des terminaux radio, des stations de base terrestres ou satellitaires, ou bien encore des points d'accès radio. L'invention concerne les réseaux de communication radio de type SISO (pour "Single Input, Single Output" en anglais), pour lesquels les entités communicantes ont une antenne unique, les réseaux de type MIMO (pour "Multiple Input, Multiple Output" en anglais) pour lesquels les entités communicantes ont une pluralité d'antennes, et les réseaux combinant des entités communicantes comportant une antenne et des entités communicantes avec une pluralité d'antennes de type SIMO (pour "Single Input, Multiple Output" en anglais) ou MISO (pour "Multiple Input, Single Output").

Un signal radio transmis par une antenne d'une entité communicante, dit signal d'antenne, subit des déformations en fonction des conditions de propagation entre un point d'origine défini en sortie de l'antenne d'origine et un point destinataire défini en entrée d'une antenne de l'entité communicante destinataire. Afin de limiter ces déformations, le signal d'antenne est préalablement distordu par application de coefficients de pré-égalisation en fonction des caractéristiques du canal de propagation entre ces deux antennes. Il est donc nécessaire de caractériser ce canal de propagation.

Parmi les méthodes de pré-égalisation existantes, se distinguent les méthodes basées sur le retournement temporel du fait de leur complexité réduite et de leur performance.

Le retournement temporel est une technique de focalisation des ondes, typiquement des ondes acoustiques, qui repose sur l'invariance par renversement du temps de l'équation d'onde. Ainsi, une onde temporellement inversée se propage comme une onde directe qui remonterait le temps.

Une impulsion brève émise d'un point origine se propage dans un milieu de propagation. Une partie de cette onde reçue par un point destinataire est retournée temporellement avant d'être renvoyée dans le milieu de propagation. L'onde converge vers le point origine en y reformant une impulsion brève. Le signal recueilli au point origine est quasi identique dans sa forme au signal d'origine émis au point origine. En particulier l'onde retournée converge d'autant plus précisément que le milieu de propagation est complexe. Le retournement temporel du canal de propagation appliqué à l'onde permet de concentrer l'énergie et d'annuler l'effet de ce canal en un point focal lors de la transmission de l'onde ainsi pré-distordue à partir du point d'origine.

La technique du retournement temporel est ainsi appliquée aux réseaux de communication radio pour annuler l'effet du canal de propagation sur le signal d'antenne en un point focal, notamment en réduisant l'étalement du canal par concentration de l'énergie au point focal, et simplifier le traitement de symboles reçus après la traversée du canal. Le signal d'antenne émis par une antenne de l'entité communicante d'origine est ainsi pré-égalisé par application de coefficients obtenus à partir du retournement temporel de la réponse impulsionnelle du canal de propagation que ce signal d'antenne doit traverser. La mise en oeuvre du retournement temporel nécessite donc la connaissance du canal de propagation par l'entité communicante d'origine dans la bande de fréquence dédiée aux communications issues de cette entité.

Or, dans le cas d'une transmission en mode FDD, les transmissions d'une entité communicante, dite entité communicante d'origine, vers une entité communicante destinataire et les transmissions dans le sens contraire sont effectuées dans des bandes de fréquences distinctes. Il s'agit par exemple pour un système de radiocommunication, d'une transmission dans une première bande de fréquence d'un terminal radio mobile vers une station de base, dite transmission en sens montant, et d'une transmission dans une deuxième bande de fréquence d'une station de base vers un terminal radio mobile, dite transmission en sens descendant. Si une entité communicante peut estimer un canal de propagation à partir de la réception d'un signal le traversant, elle ne peut pas estimer un canal de propagation à partir d'un signal transmis dans une bande de fréquence différente. En effet, aucune propriété de réciprocité du canal de transmission ne peut être appliquée contrairement à une transmission en mode TDD pour laquelle le partage de la même bande de bande de fréquence permet d'estimer simplement le canal indépendamment du sens de transmission. Il est donc particulièrement intéressant d'avoir une technique de pré-égalisation des signaux d'antennes pour des transmissions en mode FDD.

Une première solution est proposée dans l'article intitulé "From Theory to practice: an overview of MIMO space-time coded wireless systems" dont les auteurs sont David Gesbert, Mansoor Shafi, Da-Shan Shiu, Peter J Smith, et Aymon Naguib, et publié dans la revue IEEE Journal on Selected Areas in Communication, vol 21, N°3, en avril 2003. La méthode proposée utilise le retournement temporel comme technique de pré-égalisation dont les coefficients sont évalués à partir de l'estimation du canal de propagation effectuée par l'entité communicante destinataire. Cette estimation est réalisée par l'entité communicante destinataire à partir de la connaissance de pilotes préalablement émis par l'entité communicante d'origine. Une quantification de l'estimation du canal de propagation est alors délivrée à l'entité communicante origine. Cependant, la quantification de l'estimation du canal de propagation doit être suffisamment efficace afin de garantir une pré-égalisation efficace. Par ailleurs, le besoin de ressources radio nécessaires pour délivrer l'estimation quantifiée du canal de propagation augmente avec la précision de la quantification.

Un compromis doit donc être atteint entre précision de la quantification de l'estimation du canal de propagation et consommation de ressources radio utilisées pour l'émission de l'estimée quantifiée du canal de propagation. Le brevet US 2003/0138053-A1 propose d'effectuer le retournement temporel à partir de l'estimation du canal après une traversée du canal vers l'entité d'origine.

L'invention propose une solution alternative offrant une méthode de pré-égalisation basée sur le retournement temporel sans nécessiter la délivrance par l'entité destinataire d'une estimation quantifiée d'un canal de propagation. Cette solution est adaptée pour des entités communicantes avec une seule antenne pour laquelle le signal de données est composé d'un seul signal d'antenne, ou pour des entités communicantes avec plusieurs antennes pour lesquelles un signal de données est composé d'une pluralité de signaux d'antenne.

Pour atteindre cet objectif, l'invention propose un procédé de pré-égalisation d'un signal de données transmis en duplexage en fréquence par une entité communicante d'origine comportant un ensemble d'antennes d'origine, à destination d'une entité communicante destinataire comportant un ensemble d'antennes destinataires. Le procédé comporte :

- une étape d'émission d'une première séquence pilote par une antenne destinataire,
- une étape d'estimation par l'entité d'origine d'une première réponse impulsionnelle d'un premier canal de propagation entre l'antenne destinataire et une antenne de référence de l'ensemble d'antennes d'origine,
- une étape itérative comportant des sous-étapes de :

  - émission par une antenne d'origine d'une deuxième séquence pilote modulée par la première réponse impulsionnelle,
  - estimation par l'entité destinataire d'une réponse impulsionnelle combinée du premier canal de propagation et d'un deuxième canal de propagation entre l'antenne d'origine et l'antenne destinataire,
  - retournement temporel de ladite réponse impulsionnelle combinée,
  - émission par l'antenne destinataire d'une troisième séquence pilote modulée par la réponse impulsionnelle combinée retournée temporellement, et
  - estimation d'une réponse impulsionnelle composite des premier et deuxième canaux de propagation à partir de la troisième séquence pilote modulée reçue par l'antenne de référence,

  l'étape itérative étant réitérée pour au moins une partie de l'ensemble des antennes d'origine,
  les étapes d'émission d'une première séquence pilote, d'estimation de ladite première réponse impulsionnelle et étape itérative étant réitérées pour au moins une partie de l'ensemble des antennes destinataires, et
- une étape de détermination de coefficients de pré-égalisation du signal de données à partir d'une combinaison d'un ensemble de réponses impulsionnelles composites.

Ce procédé permet ainsi de s'affranchir de l'utilisation de ressources radio pour l'émission d'une estimation d'un canal de propagation. De plus, aucune quantification n'est nécessaire ce qui permet de garantir une pré-égalisation efficace. L'entité communicante destinataire libère les ressources destinées auparavant à délivrer la ou les estimation(s) de canaux de propagation sans adjonction de traitements analogiques ou numériques complexes.

La complexité du procédé de pré-égalisation selon l'invention dans l'entité communicante destinataire est ainsi limitée à la mise en oeuvre d'un retournement temporel d'une réponse impulsionnelle combinée et d'une estimation de canal.

D'autre part, les coefficients de pré-égalisation sont déterminés directement à partir d'une combinaison d'un ensemble de réponses impulsionnelles composites. Le procédé est indépendant des différentes méthodes de pré-codage et de modulation appliquées à des données binaires générant un signal de données comportant une pluralité de signaux d'antenne.

En outre, l'invention concerne indifféremment les réseaux de communication radio de type SISO pour lesquels les entités communicantes ont une antenne unique, les réseaux de type MIMO pour lesquels les entités communicantes ont une pluralité d'antennes, et les réseaux combinant des entités communicantes comportant une antenne et des entités communicantes avec une pluralité d'antennes de type SIMO ou MISO.

Le procédé comporte en outre, dans l'étape d'estimation de la réponse impulsionnelle du premier canal de propagation, une sélection de l'antenne de référence en fonction d'un ensemble de signaux pilotes reçus par l'ensemble d'antennes d'origine.

Cette sélection permet ainsi de sélectionner le premier canal de propagation en fonction de caractéristiques des signaux pilotes reçus, par exemple leur étalement dans le temps du signal.

Dans un mode particulier de réalisation, la sélection de l'antenne de référence est réalisée en fonction de l'énergie des signaux pilotes reçus de l'ensemble des signaux pilotes reçus par l'ensemble des antennes d'origine.

Cette sélection permet ainsi de privilégier, par exemple, le premier canal de propagation dans lequel l'énergie du signal est la moins atténuée.

L'invention concerne également un dispositif pour la pré-égalisation d'un signal de données pour une entité communicante d'origine comportant un ensemble d'antennes d'origine, l'entité communicante d'origine étant apte à transmettre en duplexage en fréquence le signal à destination d'une entité communicante destinataire comportant un ensemble d'antennes destinataires. Le dispositif comporte des moyens de :

- réception d'une première séquence pilote émise par une antenne destinataire,
- estimation d'une première réponse impulsionnelle d'un premier canal de propagation entre l'antenne destinataire et une antenne de référence,
- émission par une antenne d'origine d'une deuxième séquence pilote modulée par la première réponse impulsionnelle,
- estimation d'une réponse impulsionnelle composite du premier canal de propagation et d'un deuxième canal de propagation entre l'antenne destinataire et l'antenne d'origine à partir d'une troisième séquence pilote émise par l'antenne destinataire, et
- détermination de coefficients de pré-égalisation du signal de données à partir d'une combinaison d'un ensemble de réponses impulsionnelles composites, les moyens d'émission, de réception et d'estimation étant mis en oeuvre itérativement pour au moins une partie de l'ensemble des antennes destinataires et au moins une partie de l'ensemble d'antennes d'origine.

L'invention concerne également un dispositif pour la pré-égalisation d'un signal de données pour une entité communicante destinataire, comportant un ensemble d'antennes destinataires, l'entité communicante destinataire étant apte à recevoir le signal de données transmis en duplexage en fréquence par une entité communicante origine comportant un ensemble d'antennes d'origine. Le dispositif comporte des moyens de :

- émission par une antenne destinataire d'une première séquence pilote à destination de l'entité communicante d'origine,
- réception d'une deuxième séquence pilote émise par une antenne d'origine, la deuxième séquence étant modulée par une première réponse impulsionnelle d'un premier canal de propagation entre l'antenne destinataire et une antenne de référence,
- estimation d'une réponse impulsionnelle combinée du premier canal de propagation et d'un deuxième canal de propagation entre l'antenne d'origine et l'antenne destinataire,
- retournement temporel de la réponse impulsionnelle combinée, et
- émission d'une troisième séquence pilote modulée par ladite réponse impulsionnelle combinée retournée temporellement, les moyens d'émission, de réception, d'estimation et de retournement temporel étant mis en oeuvre itérativement pour au moins une partie de l'ensemble des antennes destinataires et au moins une partie de l'ensemble des antennes d'origine.

L'invention concerne également une entité communicante d'un système de communication radio comportant au moins un des dispositifs pour la pré-égalisation d'un signal de données précités.

L'invention concerne également un système de communication radio comprenant au moins une entité communicante d'origine et au moins une entité communicante destinataire selon l'invention.

L'invention concerne également un programme d'ordinateur pour une entité communicante d'origine comprenant les instructions logicielles pour commander la mise en oeuvre par l'entité de celles des étapes du procédé selon l'invention qui sont mises en oeuvre par l'entité communicante d'origine lorsque le programme est exécuté par l'entité communicante d'origine.

L'invention concerne également un programme d'ordinateur pour une entité communicante destinataire comprenant les instructions logicielles pour commander la mise en oeuvre par l'entité de celles des étapes du procédé selon l'invention qui sont mises en oeuvre par l'entité communicante destinataire lorsque le programme est exécuté par l'entité communicante destinataire.

Les dispositifs, entités communicantes, système et programmes d'ordinateur présentent des avantages analogues à ceux précédemment décrits.

D'autres caractéristiques et avantages de la présente invention apparaîtront plus clairement à la lecture de la description suivante de plusieurs modes particuliers de réalisation du procédé de pré-égalisation d'un signal de données et des entités communicantes associées, donnés à titre de simples exemples illustratifs et non limitatifs, et des dessins annexés, sur lesquels :

- la figure 1 est un bloc-diagramme schématique d'une entité communicante d'origine communicant avec une entité communicante destinataire selon l'invention, et

- la figure 2 représente les étapes du procédé de pré-égalisation d'un signal de données selon un mode particulier de réalisation.

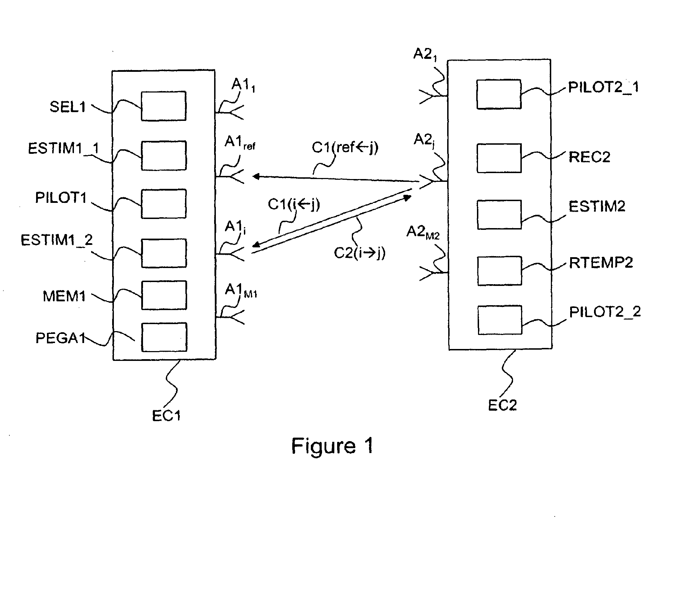

En référence à la **figure 1,** une entité communicante d'origine EC1 est apte à communiquer avec une entité destinataire EC2 au travers d'un réseau de communication radio basé sur un duplexage en fréquence FDD non représenté sur la figure.

Par exemple, le réseau de radiocommunication est un réseau de radiocommunication cellulaire de type UMTS (pour "Universal Mobile Communication System" en anglais) défini par l'organisme de spécification 3GPP (pour "3rd Generation Partnership Project" en anglais), et ses évolutions dont le 3GPP-LTE (pour "Long Term Evolution" en anglais).

Les entités communicantes peuvent être des terminaux radio mobiles ou bien encore des stations de base terrestres ou satellitaires, ou bien encore des points d'accès. Selon le mode FDD, les transmissions d'une station de base vers un terminal radio mobile, dites en voie montante, sont effectuées dans une bande de fréquence distincte de la bande de fréquence dédiée aux transmissions d'un terminal radio mobile vers une station de base, dites en voie descendante. Par souci de clarté, l'invention est présentée pour la transmission unidirectionnelle d'un signal de données de l'entité communicante EC1 à destination de l'entité communicante EC2, que ce soit dans le sens montant ou dans le sens descendant. L'invention concerne également les transmissions bidirectionnelles.

L'entité communicante d'origine EC1 comporte M1 antennes d'origine ($A1_1$, ...$A1_{ref}$,.., $A1_i$, $A1_{M1}$), avec M1 supérieur ou égal à 1. L'entité communicante destinataire comporte M2 antennes destinataires ($A2_1$, ...$A2_j$, $A2_{M2}$), avec M2 supérieur ou égal à 1.

L'entité communicante destinataire EC2 est apte à émettre un signal radio à partir d'au moins une quelconque des antennes $A2_j$, j compris entre 1 et M2, à destination de l'entité communicante d'origine EC1 dans une première bande de fréquence donnée. Un premier canal de propagation $C1(i \leftarrow j)$ est défini entre l'antenne $A2_j$ de l'entité communicante EC2 et une antenne $A1_i$ de l'entité communicante d'origine EC1. De même, un premier canal de propagation $C1(ref \leftarrow j)$ est défini entre l'antenne $A2_j$ de l'entité communicante EC2 et l'antenne $A1_{ref}$ de l'entité communicante d'origine EC1. M1xM2 premiers canaux de propagation $C1(i \leftarrow j)$, pour i variant de 1 à M1 et j variant de 1 à M2, sont ainsi définis entre les entités communicantes EC1 et EC2.

L'entité communicante d'origine EC1 est apte à émettre un signal radio à partir d'au moins une quelconque des antennes $A1_i$, i compris entre 1 et M1, à destination de l'entité communicante destinataire EC2 dans une deuxième bande de fréquence distincte de la première. Un deuxième canal de propagation $C2(i \rightarrow j)$ est défini entre l'antenne $A1_i$ de l'entité communicante EC1 et une antenne $A2_j$ de l'entité communicante destinataire EC2 pour une transmission de l'entité communicante EC1 vers l'entité communicante EC2. M1xM2 deuxièmes canaux de propagation $C2(i \rightarrow j)$, pour i variant de 1 à M1 et j variant de 1 à M2, sont ainsi définis entre les entités communicantes EC1 et EC2.

Dans la figure 1 sont seulement représentés des moyens inclus dans l'entité communicante d'origine et des moyens inclus dans l'entité d'origine destinataire en relation avec l'invention.

Les entités communicantes d'origine et destinataires comportent en outre une unité centrale de commande, non représentée, à laquelle les moyens inclus sont reliés, destinée à contrôler le fonctionnement de ces moyens.

L'entité communicante d'origine comporte en outre un générateur de signal de données comportant M1 signaux d'antenne. De tels signaux d'antenne sont définis à partir de données binaires par des méthodes de modulation, codage et répartition sur les M1 antennes par exemple selon l'article "Space block Coding: A simple transmitter diversity technique for wireless communications", publié dans la revue IEEE Journal areas communications, vol16 pp1456-1458, en octobre, 1998 dont l'auteur est S. Alamouti.

L'entité communicante d'origine comporte :

- un récepteur sélectif SEL1 agencé pour recevoir sur l'ensemble des antennes d'origine $A1_i$, i compris entre 1 et M1, une première séquence pilote émise par l'entité communicante EC2, et pour sélectionner une antenne de référence à partir de l'ensemble des signaux pilotes reçus sur l'ensemble des antennes d'origine ,
- un estimateur de canal ESTIM1_1 agencé pour estimer une première réponse impulsionnelle d'un premier canal de propagation à partir d'un signal pilote reçu sur l'antenne de référence sélectionnée par le récepteur sélectif SEL1,
- un générateur de séquence pilote PILOT1 agencé pour émettre une deuxième séquence pilote modulée par la première réponse impulsionnelle délivrée par l'estimateur de canal ESTIM1. La deuxième séquence pilote modulée est émise sur une fréquence porteuse f1 de la bande de fréquence dédiée aux transmissions de l'entité communicante EC1 à destination de l'entité communicante EC2,
- un estimateur de canal ESTIM1_2 agencé pour estimer une réponse impulsionnelle composite du premier canal de propagation et d'un deuxième canal de propagation à partir d'une troisième séquence pilote reçue par l'antenne de référence,
- une mémoire MEM1 mémorisant des réponses impulsionnelles composites retournées temporellement ou des fonctions de transfert correspondantes délivrées par l'estimateur de canal ESTIM1_2, et

- un pré-égaliseur PEGA1 agencé pour déterminer des coefficients de pré-égalisation à partir d'une combinaison de réponses impulsionnelles composites retournées temporellement ou de fonctions de transfert mémorisées dans la mémoire MEM1.

L'entité communicante destinataire comporte :

- un générateur de séquence pilote PILOT2_1 agencé pour émettre une première séquence pilote à partir d'une antenne destinataire A2$_j$, j compris entre 1 et M2. La première séquence pilote est émise sur une fréquence porteuse f2 de la bande de fréquence dédiée aux transmissions de l'entité communicante EC2 à destination de l'entité communicante EC1,
- un récepteur REC2 agencé pour recevoir via une antenne destinataire une deuxième séquence pilote modulée par une première réponse impulsionnelle d'un premier canal de propagation, la deuxième séquence pilote modulée étant émise par l'entité communicante d'origine,
- un estimateur de canal ESTIM2 agencé pour estimer une réponse impulsionnelle combinée du premier canal de propagation et d'un deuxième canal de propagation à partir de la deuxième séquence pilote modulée reçue,
- un analyseur d'impulsion RTEMP2 agencé pour retourner temporellement la réponse impulsionnelle combinée délivrée par l'estimateur de canal ESTIM2_1, et
- un générateur de séquence pilote PILOT2_2 agencé pour émettre, à partir d'une antenne destinataire, une troisième séquence pilote modulée par la réponse impulsionnelle combinée retournée temporellement délivrée par l'analyseur d'impulsion RTEMP2. La troisième séquence pilote modulée est émise sur une fréquence porteuse de la bande de fréquence dédiée aux transmissions de l'entité communicante EC2 à destination de l'entité communicante EC1.

Les différents moyens des entités communicantes d'origine et destinataires peuvent être mis en oeuvre par des techniques analogiques ou numériques bien connues de l'homme du métier.

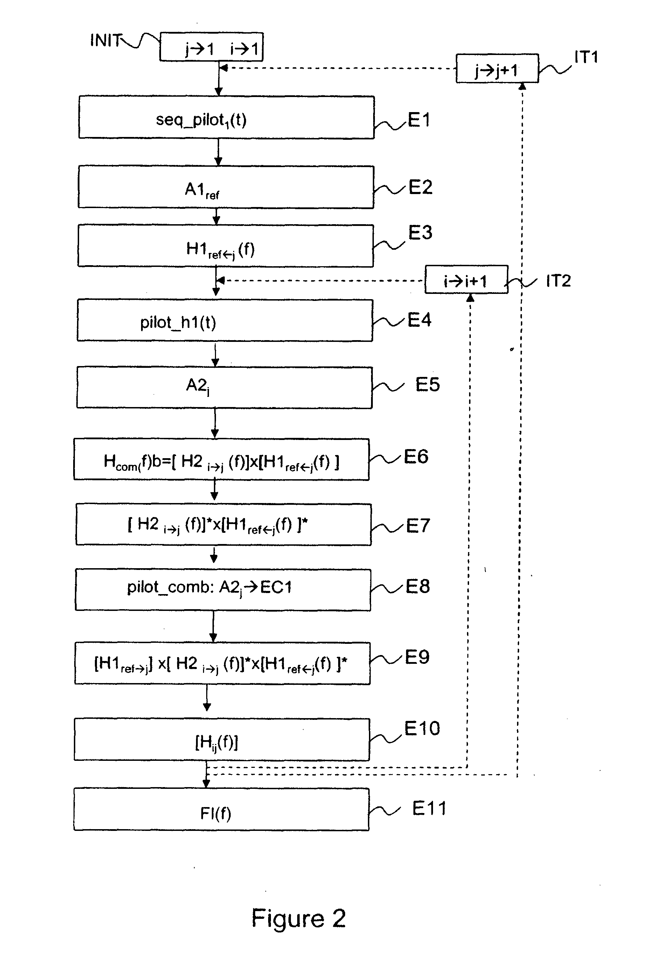

En référence à la figure 2, le procédé de pré-égalisation d'un signal de données selon l'invention comprend des étapes E1 à E11, une partie des étapes étant exécutée dans l'entité communicante d'origine EC1, et l'autre partie dans l'entité communicante destinataire EC2. Les résultats des étapes sont dans cet exemple décrits dans le domaine fréquentiel mais transposables directement dans le domaine temporel compte tenu des définitions suivantes.

Une réponse impulsionnelle est définie par une fonction ri(t), fonction du temps t, dont la fonction de transfert est donnée par RI(f), fonction de la fréquence f. Le produit de convolution de réponses impulsionnelles correspond au produit des fonctions de transfert correspondantes. Une réponse impulsionnelle ri(t) retournée temporellement est notée ri(-t), et la fonction de transfert correspondante est RI(f)*, conjuguée de la fonction de transfert RI(f).

Les étapes E1 à E10 sont réitérées pour au moins une partie de l'ensemble des antennes destinataires. Les itérations sont symbolisées par une étape d'initialisation INIT et une étape IT1 d'incrémentation de l'indice j des antennes destinataires A2$_j$. Une itération des étapes E1 à E10 est ainsi décrite pour une antenne destinataire A2$_j$, j compris entre 1 et M2.

A l'étape E1, le générateur de séquence pilote PILOT2_1 de l'entité communicante destinataire génère une première séquence pilote seq_pilot$_1$(t). Cette première séquence pilote est émise par l'antenne A2$_j$ sur une fréquence porteuse f2 de la bande de fréquence dédiée aux transmissions de l'entité communicante EC2 à destination de l'entité communicante EC 1.

A l'étape suivante E2, le récepteur sélectif SEL1 de l'entité communicante d'origine reçoit sur l'ensemble des antennes d'origine la première séquence pilote émise par l'entité communicante destinataire EC2. Le récepteur sélectif détermine une antenne de référence à partir de l'ensemble des signaux pilotes reçus sur l'ensemble des antennes d'origine. Il effectue ce choix par exemple en comparant les énergies reçues sur les différentes antennes d'origine et sélectionne le signal pilote reçu d'énergie maximum. Dans un deuxième exemple, le récepteur sélectif sélectionne l'antenne pour laquelle le signal pilote reçu est le moins étalé dans le temps. Le récepteur sélectif peut également dans un autre exemple choisir une antenne aléatoirement.

Le récepteur sélectif délivre le signal pilote reçu sur l'antenne de référence à l'estimateur de canal ESTIM1_1 de l'entité communicante d'origine.

A l'étape E3, l'estimateur de canal ESTIM1_1, à partir du signal pilote délivré par le récepteur sélectif, estime une première réponse impulsionnelle h1$_{ref \leftarrow j}$(t), ou de façon équivalente une fonction de transfert H1$_{ref \leftarrow j}$(f), d'un premier canal de propagation C1(ref←j) entre l'antenne destinataire A2$_j$ et l'antenne de référence A1$_{ref}$. L'estimation est réalisée, à partir de la connaissance de la première séquence pilote émise par l'antenne destinataire A2$_j$, par toute méthode d'estimation de canal bien connue de l'homme du métier par exemple selon l'une des méthodes indiquées dans l'ouvrage intitulé "Digital Communications" dont les auteurs sont John G. Proakis et Masoud Saheli publié en novembre 2007 , édition Mc Graw-Hill.

Les étapes E4 à E10 sont ensuite réitérées pour au moins une partie de l'ensemble des antennes d'origine. Les itérations sont symbolisées par l'étape d'initialisation INIT et une étape IT2 d'incrémentation de l'indice i des antennes d'origine A 1;. Une itération des étapes E4 à E10 est ainsi décrite pour une antenne d'origine A1$_i$, i compris entre 1 et M1.

A l'étape E4, le générateur de séquence pilote PILOT1 émet une deuxième séquence pilote seq_pilot$_2$(t) modulée par la réponse impulsionnelle h1$_{ref \leftarrow j}$(t) du premier canal de propagation C1(ref←j) délivrée par l'estimateur de canal ESTIM1_1. La deuxième séquence pilote modulée pilot_h1(t) est donnée par:

$$pilot\_h1(t)= seq\_pilot_2(t) * h1_{ref \leftarrow j}(t),$$

où l'opérateur * désigne le produit de convolution.

La deuxième séquence pilote modulée est émise sur une fréquence porteuse f1 dédiée aux transmissions de l'entité communicante EC1 à destination de l'entité communicante EC2 conformément au principe de base de transmission en mode FDD. La deuxième séquence pilote modulée est alors émise via l'antenne A1$_i$ à destination de l'entité communicante destinataire.

A l'étape E5, le récepteur REC2 de l'entité communicante destinataire EC2 reçoit sur l'ensemble des antennes destinataires la deuxième séquence pilote modulée émise par l'antenne d'origine A1$_i$. Le récepteur délivre le signal pilote reçu sur l'antenne destinataire A2$_j$ à l'estimateur de canal ESTIM2 de l'entité communicante destinataire.

A l'étape E6, l'estimateur de canal ESTIM2, à partir du signal pilote délivré par le récepteur REC2, estime une réponse impulsionnelle combinée h$_{comb}$(t) du premier canal de propagation et d'un deuxième canal de propagation C2(i→j) entre l'antenne d'origine A1$_i$ et l'antenne destinataire A2$_j$. L'estimation est réalisée, à partir de la connaissance de la deuxième séquence pilote, par toute méthode d'estimation de canal bien connue de l'homme du métier, par exemple tel que cité précédemment. De façon équivalente, l'estimateur de canal estime la fonction de transfert combinée H$_{comb}$(f) correspondante donnée par

$$H_{comb}(f)= H2_{i \rightarrow j}(f) \ x \ H1_{ref \leftarrow j}(f) ,$$

la fonction de transfert H2$_{i \rightarrow j}$(f) étant représentative du deuxième canal de propagation entre l'antenne d'origine A1$_i$ et l'antenne destinataire A2$_j$.

A l'étape E7, l'analyseur d'impulsion RTEMP2 effectue le retournement temporel de la réponse impulsionnelle combinée h$_{comb}$(t). A cette fin, l'analyseur d'impulsion enregistre la réponse impulsionnelle combinée h$_{comb}$(t), mémorise par exemple les coefficients de la réponse impulsionnelle combinée et classe les conjugués de ces derniers dans un ordre inverse de celui des coefficients de h$_{comb}$(t). La fonction de transfert de la réponse impulsionnelle combinée retournée temporellement h$_{comb}$(-t) est ainsi donnée par

$$H_{comb}(f)* = [H2_{i \rightarrow j}(f)]* \ x \ [H1_{ref \leftarrow j}(f)]*$$

Dans un autre exemple, l'analyseur d'impulsion analyse la réponse impulsionnelle combinée h$_{comb}$(t) par un séparateur analogique et en déduit un modèle discret de la réponse impulsionnelle combinée. L'analyseur effectue alors le retournement temporel à partir du modèle discret.

L'analyseur d'impulsion délivre alors la réponse impulsionnelle h$_{comb}$(-t) à l'émetteur EMET2 de l'entité communicante destinataire.

A l'étape E8, le générateur de séquence pilote PILOT2_2 émet via l'antenne A2$_j$ à destination de l'entité communicante d'origine une troisième séquence pilote seq_pilot$_3$(t) modulée par la réponse impulsionnelle combinée retournée temporellement h$_{comb}$(-t).

La troisième séquence pilote modulé pilot_comb(t) est donné par:

$$pilot\_comb(t)= seq\_pilot_3(t) * h_{comb}(-t) .$$

La troisième séquence modulée est émise sur une fréquence porteuse de la bande de fréquence dédiée aux transmissions de l'entité communicante EC2 à destination de l'entité communicante EC1 selon le principe de base du mode FDD.

A l'étape E9, l'entité communicante d'origine reçoit, sur l'ensemble des antennes d'origine, la troisième séquence pilote modulée émise par l'antenne destinataire A2$_j$.

L'estimateur de canal ESTIM1_2 estime, à partir du signal pilote reçu sur l'antenne de référence, une réponse impulsionnelle composite h$_{ij}$(t) des premier et deuxième canaux de propagation C1(ref←j) et C2(i→j)) respectivement. L'estimation de canal est réalisée à partir de la connaissance de la troisième séquence pilote par toute méthode d'estimation bien connue de l'homme du métier par exemple telle que cité précédemment. La réponse impulsionnelle composite est donnée par le produit de convolution de la réponse impulsionnelle estimée du premier canal de propagation h1$_{ref→j}$(t) et du retournement temporel de la réponse impulsionnelle combinée.

De façon équivalente, l'estimateur de canal estime la fonction de transfert composite H$_{ij}$(f) correspondante donnée par:

$$H_{ij}(f) = H1_{ref_{\leftarrow} j}(f) \; x \; [H2_{i_{\rightarrow} j}(f)]^* \; x \; [H1_{ref_{\leftarrow}j}(f)]^* \; .$$

En d'autre terme, la fonction de transfert composite s'écrit également:

$$H_{ij}(f) = H1_{ref_{\leftarrow} j}(f) \; x \; [H_{comb}(f)]^*$$

A l'étape E10, l'estimateur de canal ESTIM2 délivre alors les coefficients de la fonction de transfert composite H$_{ij}$(f), ou de façon équivalente la réponse impulsionnelle composite h$_{ij}$(t) correspondante, à la mémoire MEM1 de l'entité communicante d'origine.

Les étapes E1 à E10 étant réitérées pour une partie des antennes destinataires, et une itération comprenant une réitération des étapes E4 à E10 pour une partie des antennes d'origine, la mémoire MEM1 de l'entité communicante d'origine comporte un ensemble de fonctions de transfert composites ou de réponses impulsionnelles composites mémorisées. Pour des itérations effectuées sur M1 antennes destinataires et M2 antennes d'origine, la mémoire MEM1 comporte les fonctions de transfert composites H$_{ij}$(f) pour i variant de 1 à M1 et j variant de 1à M2.

A l'étape E11, le pré-égaliseur PEGA1 de l'entité communicante d'origine détermine des coefficients de pré-égalisation d'un signal de données S(t) comportant M1 signaux d'antenne [S$_1$(t), .., S$_i$(t), .., S$_{M1}$(t)], à partir d'une combinaison des fonctions de transfert composites H$_{ij}$(f) pour former un ensemble FI de M1 filtres de pré-égalisation FI$_i$(f), i variant de 1 à M1. Le signal d'antenne Si(t), émis via l'antenne A1$_i$ est ainsi mis en forme par application du filtre correspondant FI$_i$(f) donné par:

$$FI_i(f) = \sum_{j=1}^{M2} C_j H_{ij}(f).$$

Les coefficients de pondération C$_j$, j compris entre 1 et M2, sont des paramètres configurables. Ils sont déterminés en fonction de la méthode de génération d'un signal de données utilisée. Ces paramètres sont de plus mis à jour par exemple lors de l'extinction ou l'activation d'une antenne destinataire ou en fonction de l'évolution de l'état des canaux de propagation au cours du temps.

Ultérieurement à l'étape E11, le signal de données est ainsi pré-égalisé par filtrage de chacun des signaux d'antenne par le filtre correspondant de l'ensemble FI et émis par l'entité communicante EC1 à destination de l'entité communicante EC2.

Dans un mode particulier de réalisation, les étapes E4 à E10 ne sont effectuées que pour une unique antenne d'origine A1$_i$ de l'ensemble des antennes d'origine. Ce mode de réalisation correspond au cas où le signal de données à égaliser est le signal d'antenne S$_i$(t). La mémoire MEM1 de l'entité communicante d'origine comporte M2 fonctions de transfert composites H$_{ij}$(f) pour j variant de 1 à M2. Le pré-égaliseur PEGA1 détermine un unique filtre de pré-égalisation FI$_i$(f). Le signal d'antenne S$_i$(t), émis via l'antenne A1$_i$ est ainsi mis en forme par application du filtre correspondant FI$_i$(f) donné par:

$$FI_i(f) = \sum_{j=1}^{M2} C_j H_{ij}(f).$$

Dans un mode particulier de réalisation, l'ensemble d'antennes destinataires ne comporte qu'une seule antenne destinataire $A2_1$. La succession des étapes E1 à E10 n'est mise en oeuvre que pour l'émission d'une unique première séquence pilote par l'antenne $A2_1$ de l'entité communicante destinataire. Les étapes E4 à E10 sont réitérées pour au moins une partie des antennes d'origine de l'entité communicante d'origine.

A titre d'exemple illustratif dans lequel les étapes E4 à E10 sont réitérées pour toutes les antennes d'origine, à l'étape E11, le pré-égaliseur détermine des coefficients de pré-égalisation en fonction de M1 fonctions de transfert $H_{i1}(f)$, i variant de 1 à M1. L'ensemble FI de M1 filtres de pré-égalisation $FI_i(f)$ à appliquer au signal de données est donné par

$$FI=[FI_1,\dots,FI_i(f),\dots.FI_{M1}(f)]$$

avec

$$FI_i(f) = H_{i1}(f).$$

Dans un mode particulier de réalisation, l'ensemble d'antennes d'origine ne comporte qu'une seule antenne d'origine $A1_1$. Le signal de données ne comporte alors qu'un signal d'antenne $S_1(t)$ émis par l'unique antenne $A1_1$ et l'antenne de référence est l'antenne d'origine $A1_1$. Les étapes E4 à E10 ne sont alors effectuées que pour cette unique antenne $A1_1$ de l'entité communicante d'origine.

A titre d'exemple illustratif dans lequel les étapes E1 à E10 sont réitérées pour toutes les antennes destinataires, à l'étape E11, M2 fonctions de transfert composites $H_{1j}$, j variant de 1 à M2, sont disponibles. Le pré-égaliseur détermine un unique filtre de pré-égalisation $FI_1(f)$ appliqué au signal de données partir de M2 coefficients $C_j$ tel que

$$FI_1(f) = \sum_{j=1}^{M2} C_j H_{1j}(f).$$

Dans un mode particulier de réalisation, l'ensemble d'antennes d'origine ne comporte qu'une seule antenne d'origine $A1_1$ et l'ensemble d'antennes destinataires ne comporte qu'une seule antenne destinataire $A2_1$. Le signal de données ne comporte alors qu'un signal d'antenne $S_1(t)$ émis par l'unique antenne $A1_1$ et l'antenne de référence de l'entité d'origine est l'antenne $A1_1$. A l'étape E11, la fonction de transfert $H_{11}$ détermine un unique filtre de pré-égalisation $FI_1(f)$ donné par

$$FI_1(f) = H_{11}(f).$$

Dans un mode particulier de réalisation, l'entité communicante d'origine comportant M1 antennes d'origine et l'entité communicante destinataire comportant M2 antennes destinataires, l'étape E11 de détermination des coefficients de pré-égalisation du signal de données comportant M1 signaux d'antenne est mise en oeuvre après itération des étapes E1 à E10 sans itération intermédiaire des étapes E4 à E10. Une itération des étapes E1 à E10 est alors effectuée pour tous les couples d'antenne d'origine et destinataire $(A1_i, A2_j)$, i variant de 1 à M1 et j variant de 1 à M2.

Dans les différents modes de réalisations présentés, les boucles d'itérations sont effectuées sur une partie des antennes destinataires et une partie des antennes d'origine. Le nombre d'antennes et le choix des antennes sont des paramètres configurables du procédé. Ils sont déterminés par exemple en fonction de caractéristiques des antennes.

D'autre part, les premières et/ou deuxième et/ou troisième séquences pilotes peuvent être choisies identiques.

Le procédé peut également être mise en oeuvre pour une transmission bidirectionnelle. Dans ce mode particulier de réalisation, le procédé est mis en oeuvre dans le sens montant et le sens descendant de telle sorte que l'émission d'une séquence pilote par une antenne et d'un signal d'antenne par une entité communicante ne soient pas effectuées simultanément.

L'invention décrite ici concerne un dispositif pour la pré-égalisation d'un signal de données mise en oeuvre dans une entité communicante d'origine. En conséquence, l'invention s'applique également à un programme d'ordinateur, notamment un programme d'ordinateur sur ou dans un support d'enregistrement d'informations, adapté à mettre en oeuvre l'invention. Ce programme peut utiliser n'importe quel langage de programmation, et être sous la forme de code source, code objet, ou de code intermédiaire entre code source et code objet tel que dans une forme partiellement compilée, ou dans n'importe quelle autre forme souhaitable pour implémenter celles des étapes du procédé selon l'invention mises en oeuvre dans l'entité communicante d'origine.

L'invention décrite ici concerne également un dispositif pour la pré-égalisation d'un signal de données mise en oeuvre dans une entité communicante destinataire. En conséquence, l'invention s'applique également à un programme d'ordinateur, notamment un programme d'ordinateur sur ou dans un support d'enregistrement d'informations, adapté à mettre en oeuvre l'invention. Ce programme peut utiliser n'importe quel langage de programmation, et être sous la forme de code source, code objet, ou de code intermédiaire entre code source et code objet tel que dans une forme partiellement compilée, ou dans n'importe quelle autre forme souhaitable pour implémenter celles des étapes du procédé selon l'invention mises en oeuvre dans l'entité communicante destinataire.

## Revendications

1. Procédé de pré-égalisation d'un signal de données transmis en duplexage en fréquence (FDD) par une entité communicante d'origine (EC1) comportant un ensemble d'antennes d'origine ($A1_1,...A1_{M1}$), à destination d'une entité communicante destinataire (EC2) comportant un ensemble d'antennes destinataires ($A2_1,...A2_{M2}$), **caractérisé en ce qu'**il comporte :

   • une étape d'émission d'une première séquence pilote par une antenne destinataire ($A2_j$),
   • une étape d'estimation par l'entité d'origine d'une première réponse impulsionnelle d'un premier canal de propagation ($C1(ref \leftarrow j)$) entre l'antenne destinataire et une antenne de référence ($A1_{ref}$) de l'ensemble d'antennes d'origine,
   • une étape itérative comportant des sous-étapes de :

      - émission par une antenne d'origine ($A1_i$) d'une deuxième séquence pilote modulée par ladite première réponse impulsionnelle,
      - estimation par l'entité destinataire d'une réponse impulsionnelle combinée dudit premier canal de propagation et d'un deuxième canal de propagation ($C2(i \rightarrow j)$) entre l'antenne d'origine et l'antenne destinataire,
      - retournement temporel de ladite réponse impulsionnelle combinée,
      - émission par l'antenne destinataire d'une troisième séquence pilote modulée par ladite réponse impulsionnelle combinée retournée temporellement, et
      - estimation d'une réponse impulsionnelle composite desdits premier et deuxième canaux de propagation à partir de ladite troisième séquence pilote modulée reçue par l'antenne de référence,

   ladite étape itérative étant réitérée pour au moins une partie de l'ensemble des antennes d'origine,
   lesdites étapes d'émission d'une première séquence pilote, d'estimation de ladite première réponse impulsionnelle et étape itérative étant réitérées pour au moins une partie de l'ensemble des antennes destinataires, et
   • une étape de détermination de coefficients de pré-égalisation du signal de données à partir d'une combinaison d'un ensemble de réponses impulsionnelles composites.

2. Procédé selon la revendication 1 dans lequel l'étape d'estimation de la première réponse impulsionnelle du premier canal de propagation comporte une sélection (E2) de l'antenne de référence en fonction d'un ensemble de signaux pilotes reçus par l'ensemble d'antennes d'origine.

3. Procédé selon la revendication 2, dans lequel la sélection de l'antenne de référence est réalisée en fonction de l'énergie des signaux pilotes reçus de l'ensemble des signaux pilotes reçus par l'ensemble des antennes d'origine.

4. Dispositif pour la pré-égalisation d'un signal de données pour une entité communicante (EC1), dite entité communicante d'origine, comportant un ensemble d'antennes d'origine ($A1_1,...A1_{M1}$), ladite entité communicante d'origine étant apte à transmettre en duplexage en fréquence (FDD) ledit signal à destination d'une entité communicante destinataire (EC2) comportant un ensemble d'antennes destinataires (A2$_1$,...A2$_{M2}$),
ledit dispositif étant **caractérisé en ce qu'**il comporte des moyens de :

- réception (SEL1) d'une première séquence pilote émise par une antenne destinataire (A2$_j$),
- estimation (ESTIMA1_1) d'une première réponse impulsionnelle d'un premier canal de propagation (C1(ref←j)) entre l'antenne destinataire et une antenne de référence (A1$_{ref}$),
- émission (PILOT1) par une antenne d'origine (A1$_i$) d'une deuxième séquence pilote modulée par ladite première réponse impulsionnelle,
- estimation (ESTIM1_2) d'une réponse impulsionnelle composite dudit premier canal de propagation et d'un deuxième canal de propagation (C2(i→j)) entre l'antenne destinataire et l'antenne d'origine à partir d'une troisième séquence pilote émise par l'antenne destinataire, et
- détermination (PEGA1) de coefficients de pré-égalisation du signal de données à partir d'une combinaison d'un ensemble de réponses impulsionnelles composites,

les moyens d'émission, de réception et d'estimation étant mis en oeuvre itérativement pour au moins une partie de l'ensemble des antennes destinataires et au moins une partie de l'ensemble d'antennes d'origine.

5. Dispositif pour la pré-égalisation d'un signal de données pour une entité communicante (EC2), dite entité communicante destinataire, comportant un ensemble d'antennes destinataires (A2$_1$,...A2$_{M2}$), ladite entité communicante destinataire étant apte à recevoir ledit signal de données transmis en duplexage en fréquence (FDD) par une entité communicante origine (EC1) comportant un ensemble d'antennes d'origine (A1$_1$,...A1$_{M1}$), ledit dispositif étant **caractérisé en ce qu'**il comporte des moyens de :

- émission (PILOT2_1) par une antenne destinataire (A2$_j$) d'une première séquence pilote à destination de l'entité communicante d'origine,
- réception (REC2) d'une deuxième séquence pilote émise par une antenne d'origine (A1$_i$), ladite deuxième séquence étant modulée par une première réponse impulsionnelle d'un premier canal de propagation (C1(ref←j)) entre l'antenne destinataire et une antenne de référence (A1$_{ref}$)
- estimation (ESTIM2) d'une réponse impulsionnelle combinée dudit premier canal de propagation et d'un deuxième canal de propagation (C2(i→j)) entre l'antenne d'origine et l'antenne destinataire,
- retournement temporel (RTEMP2) de la réponse impulsionnelle combinée, et
- émission (PILOT2_2) d'une troisième séquence pilote modulée par ladite réponse impulsionnelle combinée retournée temporellement,

les moyens d'émission, de réception, d'estimation et de retournement temporel étant mis en oeuvre itérativement pour au moins une partie de l'ensemble des antennes destinataires et au moins une partie de l'ensemble des antennes d'origine.

6. Entité communicante d'un système de communication radio comportant au moins un dispositif selon la revendication 4.

7. Entité communicante d'un système de communication radio comportant au moins un dispositif selon la revendication 5.

8. Système de communication radio comprenant au moins une entité communicante selon la revendication 6 et au moins une entité communicante selon la revendication 7.

9. Programme d'ordinateur pour une entité communicante, dite entité communicante d'origine, comprenant les instructions logicielles pour commander la mise en oeuvre par ladite entité de celles des étapes du procédé selon l'une quelconque des revendications 1 à 3 qui sont mises en oeuvre par l'entité communicante d'origine lorsque le programme est exécuté par l'entité communicante d'origine.

10. Programme d'ordinateur pour une entité communicante, dite entité communicante destinataire, comprenant les instructions logicielles pour commander la mise en oeuvre par ladite entité de celles des étapes du procédé selon l'une quelconque des revendications 1 à 3 qui sont mises en oeuvre par l'entité communicante destinataire lorsque le programme est exécuté par l'entité communicante destinataire.

**Patentansprüche**

1. Verfahren zur Vorentzerrung eines Datensignals, das in Frequenzzeitduplex (FDD) von einer Ursprungskommunikationseinheit (EC1), die eine Einheit von Ursprungsantennen ($A1_1$, ... $A1_{M1}$) aufweist, zu einer Zielkommunikationseinheit (EC2), die eine Einheit von Zielantennen ($A2_1$, ... $A2_{M2}$) aufweiset, übertragen wird, **dadurch gekennzeichnet, dass** es Folgendes umfasst:

   • einen Sendeschritt einer ersten Pilotsequenz durch eine Zielantenne ($A2_j$),
   • einen Schritt des Schätzens durch die Ursprungseinheit einer ersten Impulsantwort durch einen ersten Ausbreitungskanal (C1(ref←j)) zwischen der Zielantenne und einer Bezugsantenne ($A1_{ref}$) der Ursprungsantenneneinheit,
   • einen iterativen Schritt, der folgende Unterschritte aufweist:

      - Senden durch die Ursprungsantenne ($A1_i$) einer zweiten Pilotsequenz, die durch die erste Impulsantwort moduliert ist,
      - Schätzen durch die Zieleinheit einer kombinierten Impulsantwort des ersten Ausbreitungskanals und eines zweiten Ausbreitungskanals (C2(i→j)) zwischen der Ursprungsantenne und der Zielantenne,
      - Zeitumkehr der kombinierten Impulsantwort,
      - Senden durch die Zielantenne einer dritten Pilotsequenz, die mit der kombinierten zeitumgekehrten Impulsantwort moduliert ist, und
      - Schätzen einer zusammengesetzten Impulsantwort des ersten und des zweiten Ausbreitungskanals ausgehend von der dritten modulierten Pilotsequenz, die von der Bezugsantenne empfangen wird,

   wobei der iterative Schritt für mindestens einen Teil der Einheit der Ursprungsantennen wiederholt wird,
   wobei die Schritte des Sendens einer ersten Pilotsequenz, Schätzens der ersten Impulsantwort und des iterativen Schritts für mindestens einen Teil der Einheit der Zielantenne wiederholt werden, und
   • einen Bestimmungsschritt von Vorentzerrungs-Koeffizienten des Datensignals ausgehend von einer Kombination einer Einheit zusammengesetzter Impulsantworten.

2. Verfahren nach Anspruch 1, bei dem der Schritt des Schätzens der ersten Impulsantwort des ersten Ausbreitungskanals eine Auswahl (E2) der Bezugsantenne in Abhängigkeit von einer Einheit von Pilotsignalen, die von der Einheit der Ursprungsantennen empfangen wird, aufweist.

3. Verfahren nach Anspruch 2, bei dem die Auswahl der Bezugsantenne in Abhängigkeit von der Energie der empfangenen Pilotsignale der Einheit der Pilotsignale, die von der Einheit der Ursprungsantennen empfangen wird, erfolgt.

4. Vorrichtung zur Vorentzerrung eines Datensignals für eine Kommunikationseinheit (EC1), Ursprungskommunikationseinheit genannt, die eine Einheit von Ursprungsantennen ($A1_1$, ... $A1_{M1}$) aufweist, wobei die Ursprungskommunikationseinheit geeignet ist, um in Frequenzduplex (FDD) das Signal zu einer Zielkommunikationseinheit (EC2), die eine Einheit von Zielantennen ($A2_1$, ... $A2_{M2}$) aufweist, zu übertragen,
   wobei die Vorrichtung **dadurch gekennzeichnet ist, dass** sie Mittel für Folgendes aufweist:

   • Empfangen (SEL1) einer ersten Pilotsequenz, die von einer Zielantenne ($A2_j$) gesendet wird,
   • Schätzen (ESTIM1_1) einer ersten Impulsantwort eines ersten Ausbreitungskanals (C1(ref←j)) zwischen der Zielantenne und einer Bezugsantenne ($A1_{ref}$),
   • Senden (PILOT1) durch eine Ursprungsantenne ($A1_i$) einer zweiten Pilotsequenz, die mit der ersten Impulsantwort moduliert ist,
   • Schätzen (ESTIM1_2) einer zusammengesetzten Impulsantwort des ersten Ausbreitungskanals und eines zweiten Ausbreitungskanals (C2(i→j) zwischen der Zielantenne und der Ursprungsantenne ausgehend von einer dritten Pilotsequenz, die von der Zielantenne gesendet wird, und
   • Bestimmen (PEGA1) von Vorentzerrungs-Koeffizienten des Datensignals ausgehend von einer Kombination einer Einheit zusammengesetzter Impulsantworten,

   wobei die Mittel zum Senden, Empfangen und Schätzen iterativ für mindestens einen Teil der Einheit der Zielantennen und mindestens einen Teil der Einheit der Ursprungsantennen umgesetzt werden.

5. Vorrichtung zur Vorentzerrung eines Datensignals für eine Kommunikationseinheit (EC2), Zielkommunikationseinheit genannt, die eine Einheit von Zielantennen (A2$_1$, ... A2$_{M2}$) aufweist, wobei die Zielkommunikationseinheit geeignet ist, das Datensignal zu empfangen, das in Frequenzduplex (FDD) von einer Ursprungskommunikationseinheit (EC1), die eine Einheit von Ursprungsantennen (A1$_1$, ... A1$_{M1}$) aufweiset, übertragen wird,
wobei die Vorrichtung **dadurch gekennzeichnet ist, dass** sie Mittel für Folgendes aufweist:

• Senden (PILOT2_1) durch eine Zielantenne (A2$_j$) einer ersten Pilotsequenz zu der Ursprungskommunikationseinheit,
• Empfangen (REC2) einer zweiten Pilotsequenz, die von einer Ursprungsantenne (A1$_i$) gesendet wird, wobei die zweite Sequenz mit einer ersten Impulsantwort eines ersten Ausbreitungskanals (C1(ref←j)) zwischen der Zielantenne und einer Bezugsantenne (A1$_{ref}$) moduliert ist,
• Schätzen (ESTIM2) einer kombinierten Impulsantwort des ersten Ausbreitungskanals und eines zweiten Ausbreitungskanals (C2(i→j))zwischen der Ursprungsantenne und der Zielantenne,
• Zeitumkehr (RTEMP2) der kombinierten Impulsantwort und
• Senden (PILOT2_2) einer dritten Pilotsequenz, die mit der kombinierten zeitumgekehrten Impulsantwort moduliert ist,

wobei die Mittel zum Senden, Empfangen, Schätzen und Zeitumkehren iterativ für mindestens einen Teil der Einheit der Zielantennen und mindestens einen Teil der Einheit der Ursprungsantennen umgesetzt werden.

6. Kommunikationseinheit eines Funkkommunikationssystems, die mindestens eine Vorrichtung nach Anspruch 4 aufweist.

7. Kommunikationseinheit eines Funkkommunikationssystems, die mindestens eine Vorrichtung nach Anspruch 5 aufweist.

8. Funkkommunikationssystem, das mindestens eine Kommunikationseinheit nach Anspruch 6 und mindestens eine Kommunikationseinheit nach Anspruch 7 aufweist.

9. Computerprogramm für eine Kommunikationseinheit, Ursprungskommunikationseinheit genannt, das Softwareanweisungen zum Steuern der Umsetzung durch die Einheit derjenigen Schritte des Verfahrens nach einem der Ansprüche 1 bis 3, die von der Ursprungskommunikationseinheit umgesetzt werden, wenn das Programm von der Ursprungskommunikationseinheit ausgeführt wird, aufweist.

10. Computerprogramm für eine Kommunikationseinheit, Zielkommunikationseinheit genannt, das Softwareanweisungen zum Steuern der Umsetzung durch die Einheit derjenigen der Schritte des Verfahrens nach einem der Ansprüche 1 bis 3, die von der Zielkommunikationseinheit umgesetzt werden, wenn das Programm von der Zielkommunikationseinheit ausgeführt wird, aufweist.

**Claims**

1. Method for pre-equalizing a data signal transmitted using frequency-division duplexing (FDD) by a source communicating entity (EC1), having a set of source antennas (A1$_1$, ... A1$_{M1}$), to a destination communicating entity (EC2) having a set of destination antennas (A2$_1$, ... A2$_{M2}$), **characterized in that** it comprises:

• a step of transmission of a first pilot sequence by a destination antenna (A2$_j$),
• a step of estimation, by the source entity, of a first impulse response of a first propagation channel (C1(ref←j)) between the destination antenna and a reference antenna (A1$_{ref}$) from the set of source antennas,
• an iterative step comprising substeps of:

- transmission, by a source antenna (A1$_i$), of a second pilot sequence modulated by said first impulse response,
- estimation, by the destination entity, of a combined impulse response of said first propagation channel and of a second propagation channel (C2(i→j))between the source antenna and the destination antenna,
- time-reversal of said combined impulse response,
- transmission, by the destination antenna, of a third pilot sequence modulated by said time-reversed combined impulse response, and
- estimation of a composite impulse response of said first and second propagation channels on the basis of said third modulated pilot sequence received by the reference antenna,

said iterative step being reiterated for at least some of the set of source antennas,
said steps of transmission of a first pilot sequence, estimation of said first impulse response and the iterative step being reiterated for at least some of the set of destination antennas, and
• a step of determination of pre-equalization coefficients for the data signal on the basis of a combination of a set of composite impulse responses.

2. Method according to Claim 1, in which the step of estimation of the first impulse response of the first propagation channel comprises selection (E2) of the reference antenna as a function of a set of pilot signals received by the set of source antennas.

3. Method according to Claim 2, in which the selection of the reference antenna is implemented as a function of the energy of the received pilot signals for the set of pilot signals received by the set of source antennas.

4. Device for pre-equalizing a data signal for a communicating entity (EC1), called source communicating entity, having a set of source antennas ($A1_1$, ... $A1_{M1}$), said source communicating entity being capable of using frequency-division duplexing (FDD) to transmit said signal to a destination communicating entity (EC2) having a set of destination antennas ($A2_1$, ... $A2_{M2}$), said device being **characterized in that** it has means for:

• reception (SEL1) of a first pilot sequence transmitted by a destination antenna ($A2_j$),
• estimation (ESTIM1_1) of a first impulse response of a first propagation channel (C1(ref←j)) between the destination antenna and a reference antenna ($A1_{ref}$),
• transmission (PILOT1), by a source antenna ($A1_i$), of a second pilot sequence modulated by said first impulse response,
• estimation (ESTIM1_2) of a composite impulse response of said first propagation channel and of a second propagation channel (C2(i→j)) between the destination antenna and the source antenna on the basis of a third pilot sequence transmitted by the destination antenna, and
• determination (PEGA1) of pre-equalization coefficients for the data signal on the basis of a combination of a set of composite impulse responses,

the transmission, reception and estimation means being implemented iteratively for at least some of the set of destination antennas and at least some of the set of source antennas.

5. Device for pre-equalizing a data signal for a communicating entity (EC2), called destination communicating entity, having a set of destination antennas ($A2_1$, ... $A2_{M2}$), said destination communicating entity being capable of receiving said data signal transmitted using frequency-division duplexing (FDD) by a source communicating entity (EC1) having a set of source antennas ($A1_1$, ... $A1_{M1}$),
said device being **characterized in that** it has means for:

• transmission (PILOT2_1), by a destination antenna ($A2_j$), of a first pilot sequence to the source communicating entity,
• reception (REC2) of a second pilot sequence transmitted by a source antenna ($A1_i$), said second sequence being modulated by a first impulse response of a first propagation channel (C1(ref←j)) between the destination antenna and a reference antenna ($A1_{ref}$),
• estimation (ESTIM2) of a combined impulse response of said first propagation channel and of a second propagation channel (C2(i→j)) between the source antenna and the destination antenna,
• time-reversal (RTEMP2) of the combined impulse response, and
• transmission (PILOT2_2) of a third pilot sequence modulated by said time-reversed combined impulse response,

the transmission, reception, estimation and time-reversal means being implemented iteratively for at least some of the set of destination antennas and at least some of the set of source antennas.

6. Communicating entity in a radio communication system comprising at least one device according to Claim 4.

7. Communicating entity in a radio communication system comprising at least one device according to Claim 5.

8. Radio communication system comprising at least one communicating entity according to Claim 6 and at least one communicating entity according to Claim 7.

9. Computer program for a communicating entity, called source communicating entity, comprising the software instructions for controlling the implementation, by said entity, of those of the steps of the method according to any one of Claims 1 to 3 that are implemented by the source communicating entity when the program is executed by the source communicating entity.

10. Computer program for a communicating entity, called destination communicating entity, comprising the software instructions for controlling the implementation, by said entity, of those of the steps of the method according to any one of Claims 1 to 3 that are implemented by the destination communicating entity when the program is executed by the destination communicating entity.

Figure 1

INIT

j→1  i→1

j→j+1 ⟋ IT1

E1 — seq_pilot₁(t)

E2 — $A1_{ref}$

E3 — $H1_{ref\leftarrow j}(f)$

i→i+1 ⟋ IT2

E4 — pilot_h1(t)

E5 — $A2_i$

E6 — $H_{com}(f)b = [H2_{i\rightarrow j}(f)] \times [H1_{ref\leftarrow j}(f)]$

E7 — $[H2_{i\rightarrow j}(f)]^* \times [H1_{ref\leftarrow j}(f)]^*$

E8 — pilot_comb: $A2_i \rightarrow EC1$

E9 — $[H1_{ref\rightarrow j}] \times [H2_{i\rightarrow j}(f)]^* \times [H1_{ref\leftarrow j}(f)]^*$

E10 — $[H_{ij}(f)]$

E11 — FI(f)

Figure 2

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20030138053 A1

**Littérature non-brevet citée dans la description**

- **DAVID GESBERT ; MANSOOR SHAFI ; DA-SHAN SHIU ; PETER J SMITH ; YMON NAGUIB.** *IEEE Journal on Selected Areas in Communication,* Avril 2003, vol. 21 (3

- Space block Coding: A simple transmitter diversity technique for wireless communications. *IEEE Journal areas communications,* Octobre 1998, vol. 16, 1456-1458
- Digital Communications. **JOHN G. PROAKIS ; MASOUD SAHELI.** Digital Communications. Mc Graw-Hill, Novembre 2007